# EUROPÄISCHE PATENTSCHRIFT

(11) **EP 1 951 497 B1**
(45) Veröffentlichungstag und Bekanntmachung des Hinweises auf die Patenterteilung: **15.04.2009**
(21) Anmeldenummer: 06791406.9
(22) Anmeldetag: 27.09.2006
(51) Int. Cl.: B29C 47/08

(54) **LAGERSTÜTZE FÜR EXTRUDERZYLINDER UND EXTRUDER**
BEARING SUPPORT FOR EXTRUDER BARREL AND EXTRUDER
SUPPORT D'APPUI POUR CYLINDRE D'EXTRUSION ET EXTRUDEUSE

(30) Priorität: 12.10.2005 DE 102005048727
(43) Veröffentlichungstag der Anmeldung: 06.08.2008
(73) Patentinhaber: Lindauer Dornier GmbH, 88129 Lindau (DE)
(72) Erfinder: HERZ, Andreas, 87477 Sulzberg (DE)
(86) Internationale Anmeldenummer: PCT/DE2006/001705
(87) Internationale Veröffentlichungsnummer: WO 2007/041984

(56) Entgegenhaltungen:
- EP-A2- 0 894 594
- DE-C1- 3 616 761
- US-A- 4 750 841

## Beschreibung

Die Erfindung betrifft eine Lagerstütze für Extruder, insbesondere für Großextruder zur Kunststoffverarbeitung nach dem Oberbegriff des Patentanspruchs 1.

Die Erfindung betrifft ferner einen Extruder mit wenigstens einer solchen Lagerstütze nach dem Oberbegriff des Patentanspruchs 4.

Bei Großextrudern ist der Extruderzylinder in der Regel mit einem Ende starr an einer Antriebseinheit befestigt. Das gegenüberliegende Ende des im wesentlichen waagerecht angeordneten Extruderzylinders muss abgestützt werden, um die Gewichtskräfte des Extruderzylinders aufzunehmen. Eine zweckmäßige Lagerstütze muss dabei eine beträchtliche Wärmeausdehnung in Richtung der Mittenlängsachse des Extruderzylinders aufnehmen, weil Großextruderzylinder in der Kunststoffverarbeitung eine Länge von bis zu zehn Metern aufweisen und bis über 300°C aufgeheizt werden. Daraus ergeben sich Längenausdehnungen in Richtung der Mittenlängsachse des Extruderzylinders von mehreren Zentimetern. Diese Längenausdehnungen müssen von der oder den Lagerstützen aufgenommen werden, während der Extruderzylinder an der genannten Antriebseinheit ortsfest gelagert ist. In dem Extruderzylinder ist die von der Antriebseinheit angetriebene Extruderschnecke koaxial zum Extruderzylinder rotierbar angeordnet.

Neben den Wärmeausdehnungen in Achsrichtung des Extruderzylinders treten auch Wärmeausdehnungen senkrecht zur Mittenlängsachse des Zylinders auf. Vertikale Verschiebungen senkrecht zur Mittenlängsachse entstehen durch Wärmeausdehnung der Antriebseinheit und der Lagerstütze auf der antriebsabgewandten Seite des Extruderzylinders. In der Praxis hat sich gezeigt, dass sich Antriebseinheit und Lagerstütze vertikal etwa gleich weit ausdehnen, d.h. der Extruderzylinder und die darin angeordnete Schnecke verschieben sich nahezu parallel zueinander nach oben und nach unten. Deshalb haben sich die vertikalen Verschiebungen in der Praxis als unproblematisch erwiesen.

Horizontale Verschiebungen quer zur Mittenlängsachse des Extruderzylinders werden von den Anbauteilen des Extruders verursacht. Am antriebsabgewandten Ende des Extruderzylinders ist dieser über starre Schmelzeleitungen mit nachfolgenden ortsfest angeordneten Anbauteilen der Extrusionsanlage, wie z.B. mit Filtern, mit einer Schmelzepumpe und mit der Extrusionsdüse verbunden. Die Schmelzeleitungen sind in der Regel horizontal und quer zur Mittenlängsachse des Extruderzylinders angeordnet. Folglich entstehen durch Wärmedehnung in den Schmelzeleitungen und in den ortsfesten Anbauteilen horizontale Kräfte quer zur Mittenlängsachse des Extruderzylinders, die am antriebsabgewandten Ende des Extruderzylinders angreifen. Damit diese Querkräfte den antriebsseitig starr an der Antriebseinheit befestigten Extruderzylinder nicht verbiegen, ist es bekannt, den gesamten Extruder mit Antriebseinheit verschiebbar auf einem Fundament zu lagern. D.h. die unvermeidlichen, horizontalen Querverschiebungen durch Wärmedehnung in den Schmelzeleitungen werden durch ein Verschieben des gesamten Extruders aufgenommen.

Die Verschiebung des gesamten Extruders auf der Fundamentlagerung erfolgt jedoch nicht reibungsfrei und setzt aufgrund der großen Masse des Extruders der verschiebenden Kraft erheblichen Widerstand entgegen, bevor der gesamte Extruder auf der Fundamentlagerung verschoben wird. Dadurch entstehen beträchtliche Belastungen in horizontaler Richtung quer zur Mittenlängsachse des Extruderzylinders, die wiederum zum Verbiegen des Extruderzylinders führen können.

Verbiegungen des Zylinders führen dazu, dass die Extruderschnecke an der Innenfläche des Zylinders scheuert, und dass dadurch die Extruderschnecke und/oder der Zylinder beschädigt oder zumindest stark abgenutzt werden. Des Weiteren werden die Extrusionsbedingungen im Inneren des Extruderzylinders durch Verformungen des Zylinders nachteilig beeinflußt.

Für die Lagerung derartiger Extruderzylinder sind verschiedene Ausführungen von Extruderstützen bekannt. In der DE 3616761 C1 ist in Figur 1 beispielsweise eine Stütze beschrieben, die neben dem horizontalen Längenausgleich auch einen Ausgleich in vertikaler Richtung vorsieht. Eine zu diesem Zweck beschriebene schräge Bahn z.B. in Form eines Kugelbettes lässt horizontale Verschiebungen quer zur Längsachse des Extruderzylinders und damit Verbiegungen des Zylinders in dieser Richtung zu.

Weitere in den Figuren 2 bis 6 der DE 3616761 C1 beschriebene Ausführungsformen einer Stütze weisen allesamt, aufgrund mehrfach beweglicher formschlüssiger Verbindungen der Bauteile, in horizontaler Richtung quer zur Zylinderlängsachse eine bestimmte Bewegungsfreiheit auf. Dadurch sind horizontale Verschiebungen quer zur Längsachse des Extruderzylinders möglich und eine Verbiegung des Zylinders nicht ausgeschlossen. Aufgrund der mehrfach beweglichen formschlüssigen Verbindungen der Bauteile erfordern diese Ausführungen einer Stütze zudem einen hohen Fertigungs- und Montageaufwand.

Der Erfindung liegt die Aufgabe zugrunde, eine Lagerung für einen Extruderzylinder zu schaffen, die eine Längenausdehnungen des Extruderzylinders zulässt und ein horizontales, quer zur Mittenlängsachse des Extruderzylinders gerichtetes Verbiegen des Extruderzylinders verhindert. Diese Lagerung soll mit einem geringen Fertigungsaufwand realisierbar sein.

Des Weiteren soll ein Extruder, insbesondere ein Großextruder für die Kunststoffbearbeitung, mit der beschriebenen Lagerung geschaffen werden.

Die Aufgabe wird erfindungsgemäß mittels einer Lagerstütze gemäß Patentanspruch 1 und mittels eines Extruders gemäß Anspruch 4 gelöst. Zweckmäßige Weiterbildungen sind in den abhängigen Ansprüchen definiert.

Erfindungsgemäß besteht die Lagerstütze aus wenigstens einem starr mit einem Grundrahmen verbundenen Fußteil, einem Stützelement und einem starr mit dem Extruderzylinder verbundenen Aufnahmeteil. Die Mittenlängsachse des Extruderzylinders und die Mittenachse des Aufnahmeteils liegen dabei im Wesentlichen parallel zueinander. Das Fußteil ist starr und spielfrei mit wenigstens einem ersten flexiblen Verbindungselement verbunden, welches erste Verbindungselement wiederum starr und spielfrei mit dem Stützelement verbunden ist.

Das Stützelement ist starr und spielfrei mit wenigstens einem zweiten flexiblen Verbindungselement verbunden, welches zweite Verbindungselement wiederum starr und spielfrei mit dem Aufnahmeteil für den Extruderzylinder verbunden ist. Die starren und spielfreien Verbindungen zwischen allen wesentlichen Bauteilen der Lagerstütze führen dazu, dass die flexiblen Verbindungselemente als definierte Gelenkpunkte an der Stütze wirken.

Dabei sind beide flexiblen Verbindungselemente derart ausgebildet, dass das Aufnahmeteil horizontal im Wesentlichen nur in Richtung der Mittenlängsachse des Extruderzylinders bewegbar ist und horizontale Bewegungen quer zur Mittenachse des Aufnahmeteils nahezu ausgeschlossen sind. Kräfte in horizontaler Richtung quer zur Mittenlängsachse des Extruderzylinders werden aufgrund des starren, reibschlüssigen Zusammenbaus der Bauteile der Lagerstütze spielfrei in den Grundrahmen eingeleitet.

Weitere vorteilhafte Ausgestaltungen der Erfindung ergeben sich aus den Unteransprüchen. Entweder das erste oder das zweite flexible Verbindungselement ist wenigstens ein Biegeblech, oder beide Verbindungselemente bestehen aus wenigstens einem Biegeblech. Das Biegeblech hat die Form eines rechteckigen, flachen Quaders, dessen geringste Ausdehnung, namentlich die Blechdicke wesentlich geringer ist, als die Ausdehnung in den anderen beiden Richtungen, nämlich der Länge und der Breite. Daraus ergeben sich erhebliche Unterschiede bei den Widerstandsmomenten der wirksamen Flächenquerschnitte in verschiedene Richtungen. Die Abmessungen und die Anordnung des wenigstens einen Biegeblechs wird so gewählt, dass das Widerstandsmoment in horizontaler Richtung quer zur Mittenachse des Aufnahmeteils so hoch ist, dass sich die Lagerstütze in dieser Richtung durch die auftretende Belastung nicht verformt. Das Widerstandsmoment des wenigstens einen Biegeblechs in horizontaler Richtung längs der Mittenachse des Aufnahmeelements dagegen ist so gering, dass horizontale Verschiebungen in Richtung der Mittenachse des Aufnahmeelements und damit in Richtung der Mittenlängsachse des Extruderzylinders möglich sind. Auf diese Weise wird die Längenausdehnung des Extruderzylinders von der Lagerstütze aufgenommen.

Die starren Verbindungen zwischen den flexiblen Verbindungselementen und den damit verbundenen Bauteilen sind bevorzugt als Verschraubungen ausgeführt. Verschraubte Verbindungen haben den Vorteil, dass sie einfach wieder zu lösen sind. Dies kann vorteilhaft genutzt werden, um das Verformungsverhalten der Lagerstütze durch Austauschen der flexiblen Verbindungselemente durch andere flexible Verbindungselemente mit anderen Eigenschaften zu optimieren. So kann z.B. bei Ausführungen mit Biegeblechen die Anzahl, die Dicken oder das Material der Biegebleche geändert werden um das Verformungsverhalten der Lagerstütze zu verbessern.

Bei Ausführungen der Lagerstütze mit den genannten Verschraubungen weisen die flexiblen Verbindungselemente und die damit jeweils verbundenen Bauteile Ausnehmungen zum Durchführen von Schrauben auf. Die Ausnehmungen können als kreisrunde oder als längliche Löcher sowie als Gewindelöcher ausgeformt sein oder als seitliche Einschnitte oder Nuten. Langlöcher und seitliche Einschnitte haben dabei den Vorteil, dass die Verschraubung an dieser Stelle in mindestens einer Richtung verstellbar ist. Eine vertikale Verstellbarkeit ist z.B. in einer weiteren bevorzugten Ausführung der erfindungsgemäßen Lagerstütze erforderlich, nämlich in einer Ausführung, die Mittel zur Höhenverstellung des Extruderzylinders aufweist. Damit kann insbesondere bei der Montage und Inbetriebnahme des Extruders eine vorteilhafte vertikale Ausrichtung des Extruderzylinders erzielt werden.

Des Weiteren wird ein Extruder, insbesondere ein Großextruder für die Kunststoffverarbeitung offenbart, der mit wenigstens einer erfindungsgemäßen Lagerstütze ausgestattet ist. Dabei ist der Extruderzylinder im Wesentlichen horizontal angeordnet, mit einem Ende starr über eine Antriebseinheit mit einem Grundrahmen des Extruders verbunden und mittels wenigstens einer Lagerstütze gemäß einem der vorhergehenden Ansprüche abgestützt. Der Grundrahmen ist beweglich auf einem Fundamentlager angeordnet.

Abhängig von der Länge und von dem Durchmesser des Extruderzylinders kann es vorteilhaft sein, mehrere Lagerstützen in verschiedenen Anordnungen über die Länge des Extruderzylinders anzuordnen. Auf diese Weise können z.B. Durchbiegungen des Extruderzylinders aufgrund der Schwerkraft reduziert werden. Dabei ist auch die Kombination wenigstens einer erfindungsgemäßen Lagerstütze mit wenigstens einer herkömmlichen Lagerstütze denkbar. Die erfindungsgemäße Lagerstütze ist dann bevorzugt nahe an der Stelle des Extruderzylinders angeordnet, an der von außen eingeleitete Querkräfte wirksam werden.

Der gesamte Extruder mit dem Grundrahmen stellt aufgrund der in Seitenrichtung starren Lagerstütze in Richtung quer zu der Mittenlängsachse des Extruderzylinders eine starre Einheit dar und ist beweglich auf einer Fundamentlagerung angeordnet. Diese Anordnung ermöglicht horizontale Verschiebungen des Extruders, um Wärmeausdehnungen in den horizontal quer oder schräg zur Mittenlängsachse des Extruderzylinders angeordneten Schmelzeleitungen und Anbauteilen auszugleichen.

Die Erfindung und weitere sich ergebende Vorteile werden nachstehend anhand eines Ausführungsbeispiels näher erläutert.

In den anliegenden Zeichnungen zeigen:
- Figur 1:: einen erfindungsgemäßen Extruder mit einer Lagerstütze in der Seitenansicht und in der Draufsicht,
- Figur 2:: eine perspektivische Ansicht einer erfindungsgemäßen Lagerstütze,
- Figur 3:: eine erfindungsgemäße Lagerstütze in der Vorder- und Seitenansicht und
- Figur 4:: eine perspektivische Ansicht eines flexiblen Verbindungselementes.

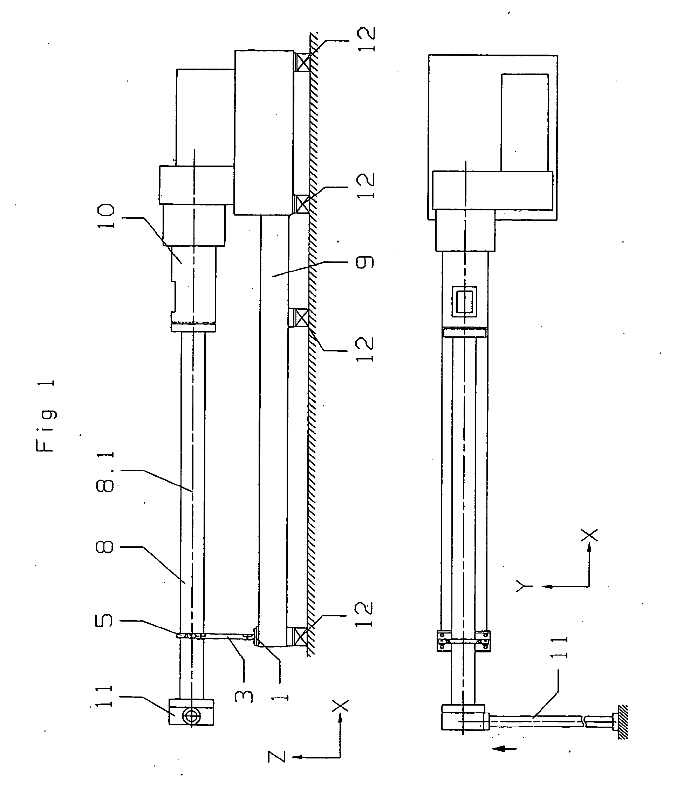

In Figur 1 ist ein Extruder bestehend aus einem Grundrahmen 9, einer Antriebseinheit 10, einem Extruderzylinder 8 und einer Lagerstütze 1, 3, 5 dargestellt. Der gesamte Extruder ist verschiebbar auf einer Fundamentlagerung 12 angeordnet.

Der Extruderzylinder 8 ist starr mit der Antriebseinheit 10 verbunden. Am antriebsseitigen Ende des Extruderzylinders 8 wird das Extrusionsmaterial zugeführt. Im Extruderzylinder 8 wird das Extrusionsmaterial geschmolzen und vermischt, während es von einer nicht dargestellten Extruderschnecke zur antriebsabgewandten Seite transportiert wird und dort den Extruderzylinder 8 verlässt.

Auf der antriebsabgewandten Seite stützt sich der Extruderzylinder 8 auf der Lagerstütze 1, 3, 5 ab. Die Lagerstütze ist starr auf dem Grundrahmen 9 verschraubt.

Der Grundrahmen 9 stützt sich über die Fundamentlagerung 12 verschiebbar auf dem Fundament ab. Die Lagerstütze 1, 3, 5 nimmt wärmebedingte Längenänderungen des Extruderzylinders 8 auf, indem sich die Biegebleche zwischen dem Fußteil 1 und dem Stützteil 3, sowie die Biegebleche zwischen dem Stützelement 3 und dem Aufnahmeteil 5 verbiegen. D.h. das Stützelement 3 kippt um einen bestimmten Winkelwert in oder entgegen der X-Richtung. Sowohl die Mittenlängsachse 8.1 des Extruderzylinders 8, als auch die Mittenachse 5.3 des Aufnahmeteils 5 sind in X-Richtung ausgerichtet und liegen in der dargestellten Ausführung beispielsweise in einer Linie.

Belastungen in Y-Richtung wirken auf den Extruderzylinder 8 ein, sobald sich in den auf der antriebsabgewandten Seite angebauten starren Schmelzeleitungen 11 Wärmeausdehnungen ergeben. Die Schmelzeleitungen 11 sind im Wesentlichen in Y-Richtung eingebaut und an ihrem dem Extruder abgewandten Ende ortsfest befestigt. Beim wärmebedingten Ausdehnen leiten die Schmelzeleitungen 11 Kräfte in Y-Richtung über den Extruderzylinder 8 und die Lagerstütze 1, 3, 5 in den Grundrahmen 9 ein. Der Grundrahmen 9 verschiebt sich dann zusammen mit dem gesamten Extruder auf dem Fundamentlager 12. Würde die Lagerstütze Verschiebungen in Y-Richtung zulassen, dann würde sich der Extruderzylinder 8 verbiegen, bevor der gesamte Extruder auf dem Fundamentlager 12 verschoben wird, weil die Fundamentlagerung 12 aufgrund der hohen Masse des Extruders einer Verschiebung beachtlichen Widerstand entgegensetzt. Diese Verbiegung des Extruderzylinders 8 wird durch die in Y-Richtung starre Lagerstütze verhindert.

Seitlich, d.h. in Y-Richtung, lässt die erfindungsgemäße Lagerstütze keine Verschiebung zu, weil die einzelnen Bauteile der Lagerstütze 1, 3, 5 starr und spielfrei miteinander verbunden sind, und weil die flexiblen Verbindungselemente in Y-Richtung nahezu starr sind.

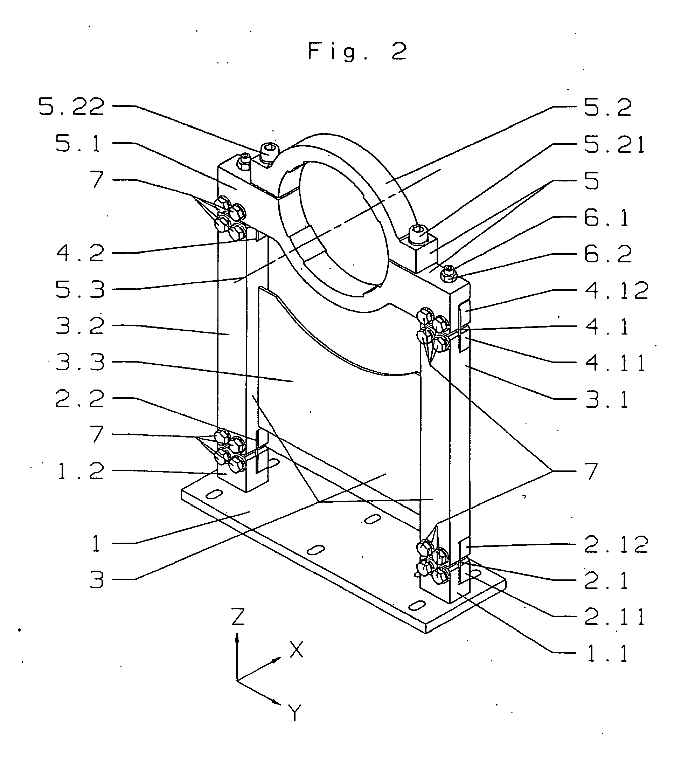

Figur 2 zeigt eine erfindungsgemäße Lagerstütze in perspektivischer Ansicht. Sie besteht aus einem Fußteil 1, welches starr mit einem Grundrahmen verschraubt wird. Auf dem Fußteil 1 sind zwei Stützenfüße 1.1 und 1.2 angeordnet.

Den mittleren Teil der Lagerstütze bildet das Stützelement 3. Es besteht aus zwei seitlichen Stützpfosten 3.1 und 3.2, die durch eine Stabilisierungsplatte 3.3 miteinander verbunden sind. Die Stabilisierungsplatte 3.3 sorgt dafür, dass sich die Lagerstütze in Y-Richtung nicht verbiegt, indem sie die seitlichen Stützpfosten 3.1 und 3.2 starr miteinander verbindet. Des Weiteren verhindert die Stabilisierungsplatte 3.3 ein Verdrehen der Lagerstütze z.B. um die Z-Achse.

Gegenüber dem Fußteil 1 ist am oberen Ende der Lagerstütze das Aufnahmeteil 5 für den Extruderzylinder 8 angeordnet. Es besteht im Wesentlichen aus einen unteren Lagerteil 5.1 und aus einem oberen Lagerdeckel 5.2. Zwischen dem unteren Lagerteil 5.1 und dem Lagerdeckel 5.2 ist der hier nicht dargestellte Extruderzylinder 8 starr eingeklemmt. Der Lagerdeckel 5.2 ist mittels zweier Innensechskantschrauben 5.21, 5.22 starr mit dem unteren Lagerteil 5.1 des Aufnahmeteils 5 verschraubt. Des Weiteren ist an dem Aufnahmeteil 5 auch eine Höhenverstellung 6.1, 6.2 vorgesehen.

Das Fußteil 1 ist über die selbe Verbindung mit dem Stützelement 3 verbunden, wie das Stützelement 3 mit dem Aufnahmeteil 5. Jede dieser Verbindungen besteht aus jeweils einem Biegeblech 2.1, 2.2, 4.1, 4.2. Jedes Biegeblech 2.1, 2.2, 4.1, 4.2 ist mittels zweier Schrauben 7 und einem Schraubklotz 2.11, 2.12, 4.11, 4.12 starr mit dem jeweils anliegenden Bauteil verschraubt. Jeder Schraubklotz 2.11, 2.12, 4.11, 4.12 ist dazu mit zwei Innengewinden versehen. Diese Art der Verbindung ist in Y-Richtung völlig spielfrei und lässt keine Verschiebung in Y-Richtung zu, weil die Biegebleche in Y-Richtung ein enorm hohes Widerstandsmoment aufweisen. Folglich überträgt die gesamte La gerstütze Belastungen in Y-Richtung spielfrei und starr vom Extruderzylinder 8 auf den Grundrahmen 9, so dass der Extruderzylinder 8 nicht durch Querkräfte verbogen wird.

Des weiteren zeigt Figur 2 die Mittel 6.1, 6.2 zur Höhenverstellung der Lagerstütze, die in identischer Ausführung auf beiden Seiten der Lagerstütze angeordnet sind. Jedes Mittel 6.1, 6.2 zur Höhenverstellung besteht aus einem Gewindebolzen 6.1 und einer Feststellmutter 6.2.

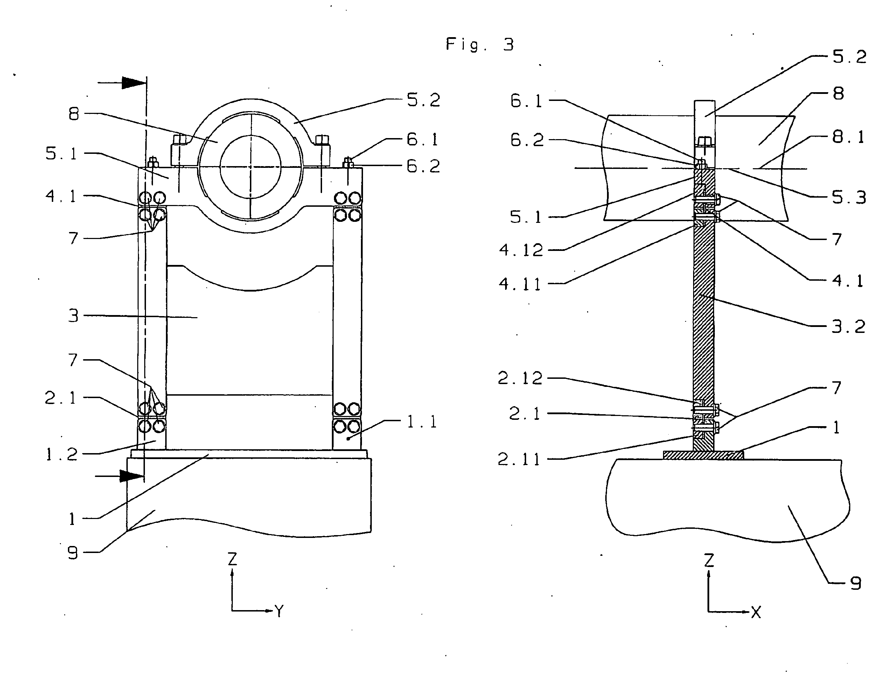

Die Funktion der Höhenverstellung ist aus der im Schnitt dargestellten Seitenansicht in Figur 3 ersichtlich.

Der Gewindebolzen 6.1 ist senkrecht durch das untere Lagerteil 5.1 geschraubt. Das untere Ende des Gewindebolzens 6.1 steht auf dem Schraubklotz 4.12 auf und stützt sich weiter über das Biegeblech 4.1 gegen das Stützelement 3 und das Fußteil 1 der Lagerstütze nach unten hin ab. Mittels der Feststellmutter 6.2 lässt sich der Gewindebolzen 6.1 in jeder Lage verspannen bzw. sichern. Damit eine vertikale Verschiebung möglich wird, sind die Schraubenlöcher im unteren Aufnahmeteil 5.1 für die Schrauben 7 als Langlöcher ausgebildet.

Zum Verstellen der Höhe der Lagerstütze und damit des Extruderzylinders 8 werden auf beiden Seiten der Lagerstütze die Feststellmutter 6.2 und die beiden oberen Schrauben 7 gelöst. Nachfolgend wird der Gewindebolzen 6.1 auf beiden Seiten der Lagerstütze hinein- oder herausgeschraubt. Durch Hineinschrauben des Gewindebolzens 6.1 hebt sich das Aufnahmeteil 5 an und damit wird auch der darin gelagerte Extruderzylinder 8 an der entsprechenden Stelle angehoben. Durch Herausschrauben des Gewindebolzens 6.1 senkt sich das Aufnahmeteil 5 und mit ihm der Extruderzylinder 8. Nach dem Verstellen der Höhe werden die Feststellmutter 6.2 und die Schrauben 7 auf beiden Seiten der Lagerstütze festgezogen, um die eingestellte Höhe des Extruderzylinders 8 zu fixieren.

Die linke Darstellung in Figur 3 zeigt die erfindungsgemäße Lagerstütze mit eingebautem Extruderzylinder 8 in der Vorderansicht.

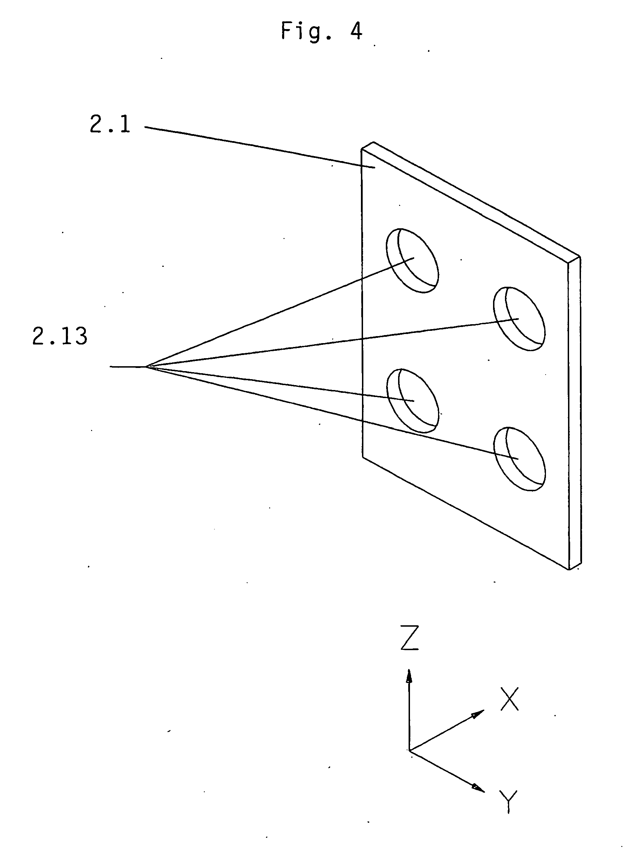

Figur 4 zeigt eine bevorzugte Ausführung der flexiblen Verbindungselemente 2.1 und 4.1 in Form eines quaderförmigen Biegebleches. Die Ausrichtung des Biegebleches in der Zeichnung bezogen auf das dargestellte Achsenkreuz entspricht dabei der Einbaulage in der erfindungsgemäßen Lagerstütze, d.h. die Blechdicke erstreckt sich in X-Richtung, die Länge und Breite des Biegebleches erstrecken sich in Y- und in Z-Richtung.

Die Ausrichtung des Biegeblechs und dessen Abmessungen haben zur Folge, dass das Biegeblech auftretenden Belastungen in X-Richtung ein wesentlich geringes Widerstandsmoment entgegensetzt als in Y- und Z-Richtung. Die Biegebleche 2.1, 4.1 sind so ausgeführt, dass sie den Belastungen in Y-Richtung ein so hohes Widerstandsmoment entgegensetzen, dass Verformungen in dieser Richtung nahezu ausgeschlossen sind.

Die Höhe des Widerstandsmomentes der Biegebleche 2.1, 4.1 in X-Richtung bestimmt das Verformungsverhalten der Lagerstütze in X-Richtung und damit in Richtung der Längenausdehnung des Extruderzylinders 8. Indem das Widerstandsmoment der Biegebleche 2.1, 4.1 z.B. in X-Richtung variiert wird, kann also das Verformungsverhalten der Lagerstütze vorteilhaft beeinflusst werden. Dies kann z.B. durch Variieren der Blechdicke oder der Materialien geschehen.

Das dargestellt Biegeblech ist mit vier kreisrunden Ausnehmungen 2.13 zum Durchführen von Schrauben 7 versehen, um so starre Verbindungen zu den anliegenden Bauteilen zu ermöglichen.

## Patentansprüche

1. Lagerstütze zur Abstützung eines Extruderzylinders, bestehend aus einem starr mit einem Grundrahmen (9) verbundenen Fußteil (1), einem Stützelement (3) und einem starr mit dem Extruderzylinder (8) verbundenen Aufnahmeteil (5), **dadurch gekennzeichnet,**
**dass** das Fußteil (1) starr mit wenigstens einem ersten flexiblen Verbindungselement (2.1, 2.2) verbunden ist,
**dass** das erste flexible Verbindungselement (2.1, 2.2) starr mit dem Stützelement (3) verbunden ist,
**dass** das Stützelement (3) starr mit wenigstens einem zweiten flexiblen Verbindungselement (4.1, 4.2) verbunden ist,
**dass** das zweite flexible Verbindungselement (4.1, 4.2) starr mit dem Aufnahmeteil (5) verbunden ist, und
**dass** sowohl das erste als auch das zweite flexible Verbindungselement (2.1, 2.2, 4.1, 4.2) derart ausgebildet ist,
**dass** das Aufnahmeteil (5) bei auftretenden Belastungen horizontal im Wesentlichen nur in Richtung der Mittenlängsachse 8.1 des Extruderzylinders (8) bewegbar ist, wobei
das erste oder das zweite oder beide flexible Verbindungselemente (2.1, 2.2, 4.1, 4.2) jeweils aus wenigstens einem Biegeblech bestehen
und
das wenigstens eine Biegeblech eine quaderförmige Grundform aufweist, wobei die Dicke des Biegeblechs wesentlich geringer ist als die Länge und als die Breite, so dass das Biegeblech angreifenden Belastungen in Richtung seiner Dickenerstreckung ein wesentlich geringeres Widerstandsmoment entgegensetzt als in Richtung seiner Längen- und Breitenerstreckung, und dass das Biegeblech in der Lagerstütze derart angeordnet ist, dass sich die Dicke des Biegeblechs in Richtung der Mittenlängsachse (8.1) des Extrudezylinders (8) erstreckt.

2. Lagerstütze nach Anspruch 1, **dadurch gekennzeichnet, dass** die flexiblen Verbindungselemente (2.1, 2.2, 4.1, 4.2) mit den benachbarten Bauteilen zumindest teilweise verschraubt sind, und dass die flexiblen Verbindungselemente (2.1, 2.2, 4.1, 4.2) und die damit verschraubten Bauteile zu diesem Zweck Ausnehmungen zum Durchführen von Schrauben (7) aufweisen.

3. Lagerstütze nach einem der Ansprüche 1 bis 2, **dadurch gekennzeichnet, dass** an der Lagerstütze Mittel zur Höhenverstellung (6.1, 6.2) vorgesehen sind.

4. Extruder, insbesondere Großextruder für die Kunststoffverarbeitung, mit einem im wesentlichen horizontal angeordneten und starr mit einer Antriebseinheit (10) verbundenen Extruderzylinder (8), wobei die Antriebseinheit (10) starr mit einem Grundrahmen (9) verbunden ist, und wobei der Grundrahmen (9) beweglich auf einer Fundamentlagerung (12) angeordnet ist, **dadurch gekennzeichnet, dass** an dem Extruderzylinder (8) wenigstens eine Lagerstütze gemäß einem der vorhergehenden Ansprüche vorgesehen ist.

## Claims

1. Bearing support for the support of an extruder barrel, consisting of a pedestal (1) connected rigidly with a base frame (9), a support element (3) and a receiving part (5) connected rigidly with the extruder barrel (8), **characterized in**
**that** the pedestal (1) is connected rigidly with at least one first flexible connection element (2.1, 2.2),
**that** the first flexible connection element (2.1, 2.2) is connected rigidly with the support element (3),
**that** the support element (3) is connected rigidly with at least one second flexible connection element (4.1, 4.2),
**that** the second flexible connection element (4.1, 4.2) is connected rigidly with the receiving part (5), and
**that** both the first as well as the second flexible connection element (2.1, 2.2, 4.1, 4.2) is embodied in such a manner
**that** the receiving part (5), in connection with arising loads, is movable horizontally essentially only in the direction of the central longitudinal axis (8.1) of the extruder barrel (8), whereby
the first or the second or both flexible connection elements (2.1, 2.2, 4.1, 4.2) respectively consist of at least one bendable metal sheet,
and
the at least one bendable metal sheet comprises a parallelepiped-shaped basic shape, whereby the thickness of the bendable metal sheet is significantly smaller than the length and than the width, so that the bendable metal sheet opposes active loads in the direction of its thickness dimension with a significantly smaller moment of resistance than in the direction of its length and width dimension, and that the bendable metal sheet is arranged in the bearing support in such a manner so that the thickness of the bendable metal sheet extends in the direction of the central longitudinal axis (8.1) of the extruder barrel (8).

2. Bearing support according to claim 1, **characterized in that** the flexible connection elements (2.1, 2.2, 4.1, 4.2) are at least partially screwed to the neighboring components, and that the flexible connection elements (2.1, 2.2, 4.1, 4.2) and the components screwed thereto for this purpose comprise recesses for the guiding through of screws (7).

3. Bearing support according to one of the claims 1 to 2, **characterized in that** means for the height adjustment (6.1, 6.2) are provided on the bearing support.

4. Extruder, especially large extruder for the plastics processing, with an extruder barrel (8) essentially horizontally arranged and connected rigidly with a drive unit (10), whereby the drive unit (10) is connected rigidly with a base frame (9), and whereby the base frame (9) is arranged movably on a foundation bearing (12), **characterized in that** at least one bearing support according to one of the preceding claims is provided on the extruder barrel (8).

## Revendications

1. Support de palier pour l'appui d'un cylindre d'extrusion se composant d'un élément de pied (1) relié rigidement à un cadre de base (9), d'un élément d'appui (3) et d'un élément de réception (5) relié rigidement au cylindre d'extrusion (8), **caractérisé en ce que** l'élément de pied (1) est relié rigidement à au moins un premier élément de liaison (2.1, 2.2) flexible,
**en ce que** le premier élément de liaison (2.1, 2.2) flexible est relié rigidement à l'élément d'appui (3),
**en ce que** l'élément d'appui (3) est relié rigidement à au moins un second élément de liaison (4.1, 4.2) flexible,
**en ce que** le second élément de liaison (4.1, 4.2) flexible est relié rigidement à l'élément de réception (5), et
**en ce que** le premier ainsi que le second éléments de liaison (2.1, 2.2, 4.1, 4.2) flexibles sont réalisés de sorte
que l'élément de réception (5) ne puisse être déplacé en cas de charges survenant horizontalement essentiellement qu'en direction de l'axe médian longitudinal (8.1) du cylindre d'extrusion (8),
le premier ou le second ou les deux éléments de liaison (2.1, 2.2, 4.1, 4.2) flexibles se composant chaque fois d'au moins une tôle de pliage et l'au moins une tôle de pliage présentant une forme de base parallélépipédique, l'épaisseur de la tôle de pliage étant essentiellement plus faible que la longueur et la largeur de sorte que la tôle de pliage oppose aux charges agissant en direction de son épaisseur un couple de résistance essentiellement plus faible qu'en direction de sa longueur et de sa largeur et que la tôle de pliage soit disposée dans le support de palier de sorte que l'épaisseur de la tôle de pliage s'étende en direction de l'axe médian longitudinal (8.1) du cylindre d'extrusion (8).

2. Support de palier selon la revendication 1, **caractérisé en ce que** les éléments de liaison (2.1, 2.2, 4.1, 4.2) flexibles sont vissés au moins partiellement aux composants contigus, et **en ce que** les éléments de liaison (2.1, 2.2, 4.1, 4.2) flexibles et les composants vissés à ceux-ci présentent à cette fin des évidements pour le passage des vis (7).

3. Support de palier selon l'une quelconque des revendications 1 à 2, **caractérisé en ce que** des moyens pour le réglage en hauteur (6.1, 6.2) sont prévus sur le support de palier.

4. Extrudeuse, en particulier grande extrudeuse pour la transformation des plastiques, avec un cylindre d'extrusion (8) disposé essentiellement horizontalement et relié rigidement à une unité d'entraînement (10), l'unité d'entraînement (10) étant reliée rigidement à un cadre de base (9) et le cadre de base (9) étant disposé due manière mobile sur un support d'embase (12), **caractérisée en ce qu'**au moins un support de palier selon l'une quelconque des revendications précédentes est prévu sur le cylindre d'extrusion (8).
